# EUROPEAN PATENT SPECIFICATION

(11) **EP 1 439 685 B1**
(45) Date of publication and mention of the grant of the patent: **27.12.2006**
(21) Application number: 03425020.9
(22) Date of filing: 17.01.2003
(51) Int. Cl.: H04M 1/02

(54) **Flip-phone cover**
Gehäuse für ein klappbares Telefon
Etui pour téléphone pliable

(43) Date of publication of application: 21.07.2004
(73) Proprietor: MOTOROLA, INC., Schaumburg, IL 60196 (US)
(72) Inventor: Becchio, Marco, 10147 Torino (IT)
(74) Representative: Cross, Rupert Edward Blount

(56) References cited:
- EP-A- 1 259 047

## Description

The present invention relates to a housing for a portable electronic device, in particular a communication device. The present invention relates in particular to a housing having a hinge mechanism for sliding and rotating two housing portions relative to one another.

The present invention is applicable to any portable electronic device such as, for example, a mobile radio, a cellular telephone, a laptop computer, a personal digital assistant (PDA).

So-called U-flip or clam form factors for example for cellular telephones have two housing portions joined by a hinge mechanism along one edge of the housing portions to enable the housing portions to rotate relative to one another. However, the hinge mechanism tends to be relatively bulky. In portable electronic devices, such as mobile telephones, space inside the housing is at a premium, and so it is desirable to reduce the space taken up with a hinge mechanism.

In general, it is preferable to locate the hinge at the edge of the housing portions to minimize interference between the housings during the relative rotation between the housing portions. However in the U-flip form factor it may be desirable to locate a display between the arms of the U-flip. In order to accommodate a larger display, and to allow better styling of the housing, it is advantageous that the axis of rotation is located in the center of the housing. However, less space is then available for the hinge.

European patent application no. EP-A-1259047 discloses a portable electronic device comprising a device housing and a housing part arranged to overlie at least a portion of the device housing in a first position and arranged for pivoting movement away from the housing to second position. A hinge connects the housing and the housing part and provides for pivoting movement of the part as well as linear movement of the part relative to the housing at the same time.

The present invention seeks to overcome at least partly the disadvantages of the prior art.

For a better understanding of the present invention, and to show how it may be brought into effect, reference will now be made, by way of example, to the accompanying drawings, in which:
Figures 1 a, 1 b and 1 c illustrate the opening operation of a housing for a portable electronic device, in accordance with the invention
Figure 2 is an expanded 3 dimensional drawing showing the parts of the hinge mechanism
Figure 3 shows the hinge mechanism of Figure 2 in an assembled state in the closed position of the housing;
Figure 4 illustrates detail of the slider part and the slider spring;
Figure 5 illustrates detail of the guide part;
Figure 6 is a partial view of the hinge mechanism in a closed position;
Figure 7 is a partial view of the hinge mechanism in an open position;
Figure 8 shows the flex connector electrical connection between the slider part and the arm portion in an assembled state in a closed position.

An embodiment of the present invention will now be described with reference to the accompanying drawings. In the drawings the same or similar features have been given the same reference numerals, for clarity.

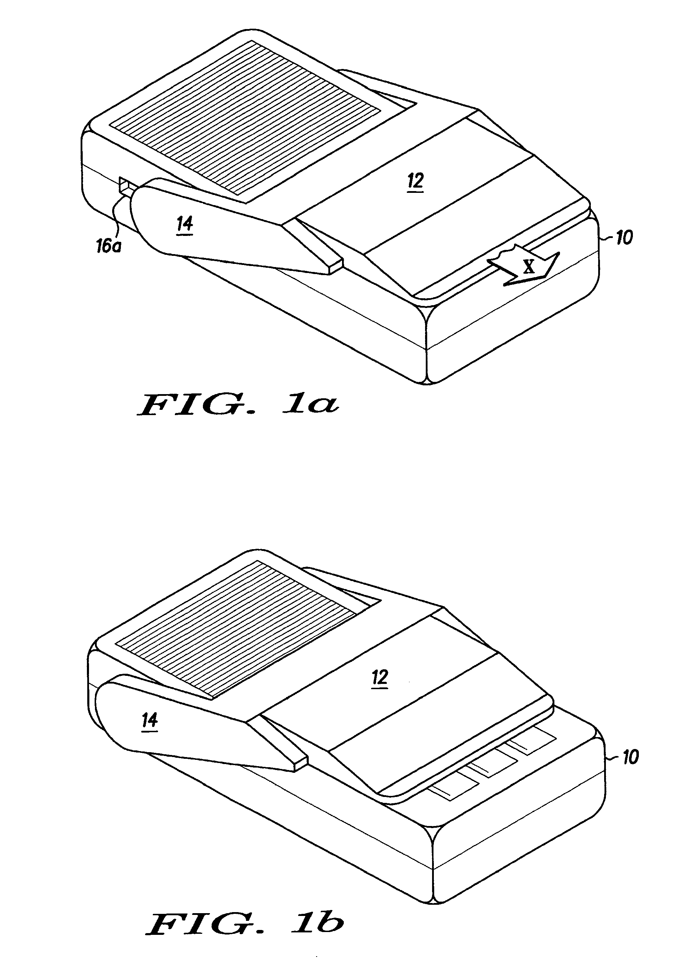

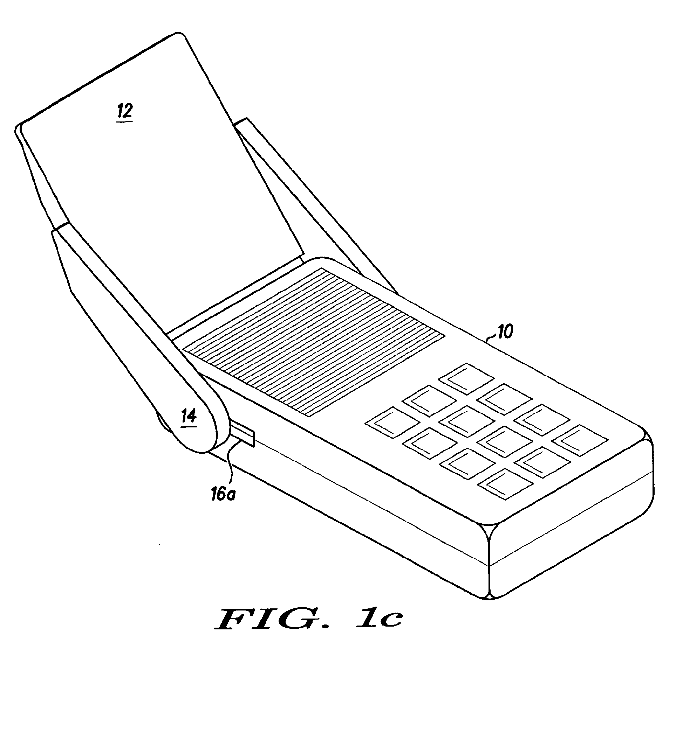

Figures 1 a, 1b and 1c show the opening operation of the housing 100 for a portable electronic device, in accordance with the invention. The illustrated exemplary housing 100 is of a 'U-flip" type; however it is clear that the present invention may be applied to other housing types.

Figure 1 a shows a first housing portion 10 and a second housing portion 12 of the housing 100. The second housing portion 12 has two arm portions 14 which extend either side of the first housing portion 10 and are fitted thereto using the hinge mechanism in accordance with the present invention, as will be explained in more detail hereafter. Slots 16a and 16b (not shown) are provided in the first housing portion 10 to enable the sliding of the second housing portion 12 relative to the first housing portion 10, as will be explained hereafter.

As shown in Figure 1a, the hinge mechanism is latched in the closed position. To open the housing 100 in accordance with the described exemplary embodiment of the invention, the user pushes the second housing portion 12 in the direction X shown in Figure 1a. This action releases the hinge mechanism, as will be explained hereafter, and the arm portions 14 of the second housing portion 20 are caused to slide along slot 16a and corresponding slot 16b (not shown) to an intermediate position, as shown in Figure 1b. Once in the intermediate position, the arm portions 14 of the second housing portion 12 are caused to rotate, so that the second housing portion 12 rotates to the open position as shown in Figure 1 c.

In order to shut the housing again, the user rotates the second housing portion 12 from the open position shown in Figure 1c back to the intermediate position shown in Figure 1b, and then pushes the second housing portion 12 in direction X until the closed position shown in Figure 1 a is reached.

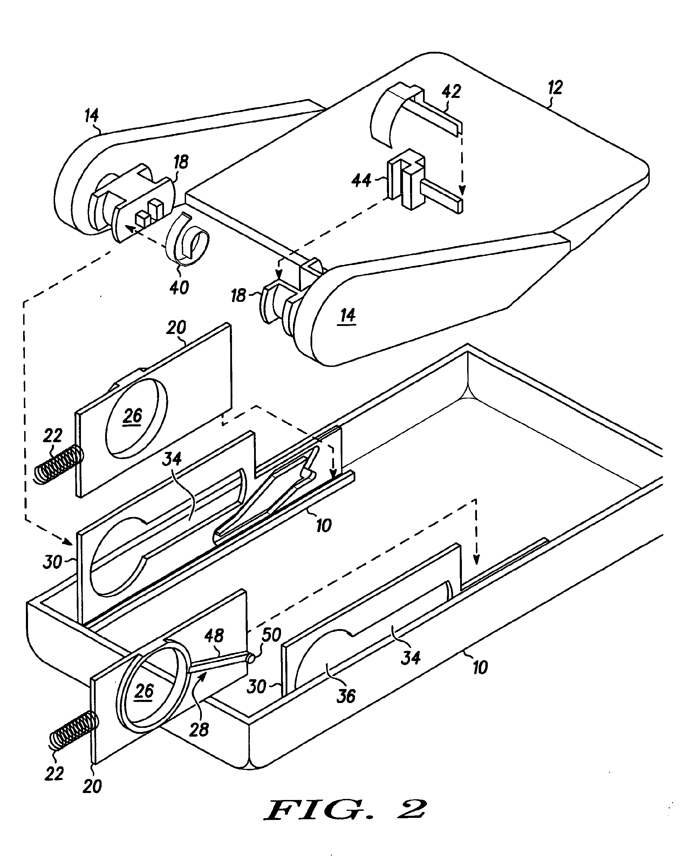

Figure 2 is an expanded 3 dimensional drawing showing parts of the hinge mechanism.

The arm portion 14 of the second housing portion has a shaped head part 18.

The shaped head part 18 is shaped so as to have a greater magnitude in a first dimension ie parallel to the first and second housings 10,12 than in a second dimension for example in a second dimension substantially perpendicular to the first. Advantageously, as shown, the outer edges of the shaped head part 18 conform to arcs of a circle.

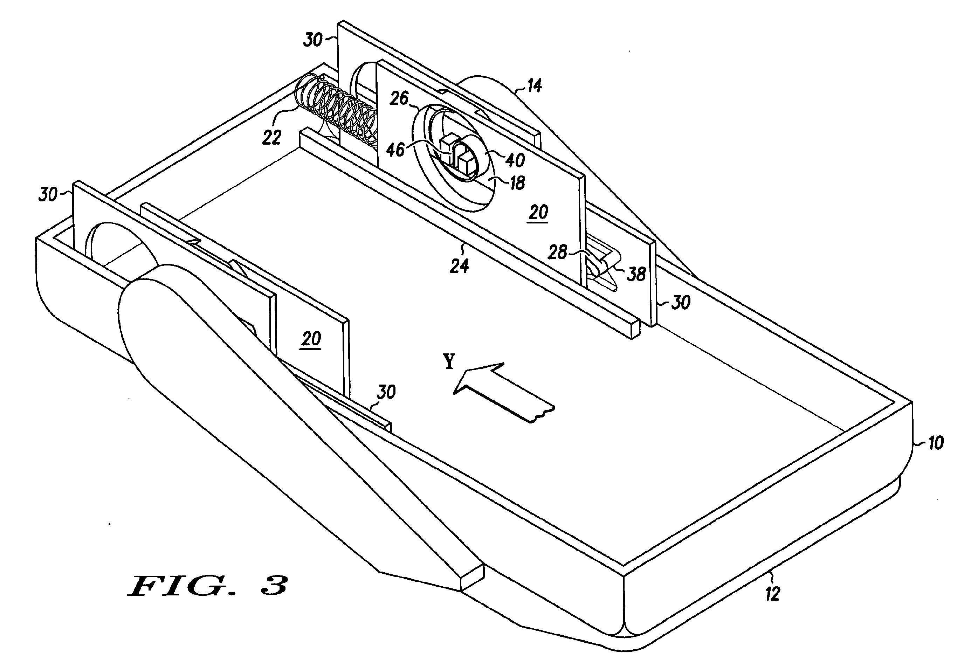

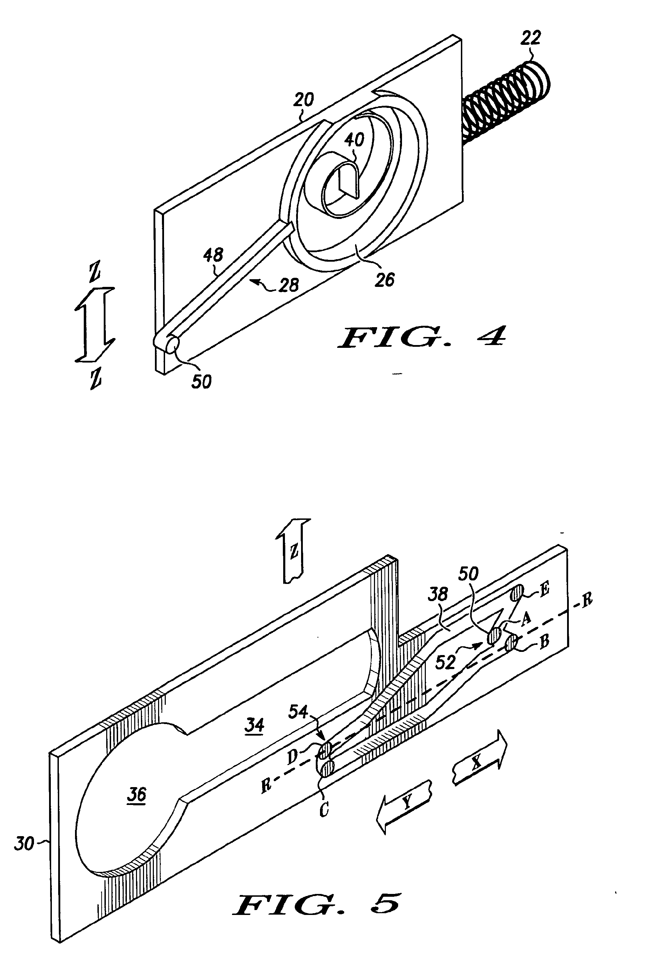

The first housing portion 10 is provided with slider parts 20 and associated slider springs 22, which will be described in more detail with reference to Figure 4. The slider parts 20 are mounted between guide rails 24, shown more clearly in Figure 3, and are able to move longitudinally along the first housing portion 10. The slider springs 22 are disposed between the respective slider part 20 and the first housing portion 10. The slider parts 20 have a slider hole 26 formed therein and are provided with a slider arm 28 (not shown in Figure 2).

The first housing portion 10 is also provided with guide parts 30, which will be described in more detail with reference to Figure 4. The guide parts 30 are either attached to the first housing portion 10, or are formed integrally with the first housing portion 10. The guide parts 30 have an arm opening 32 formed therein, the opening 32 having a slot 34 forming a slide section, and a hole 36 forming a rotation section. The guide parts 30 also have a slider arm slot 38 for receiving the slider arm 28, as will be described hereafter.

The hinge mechanism also comprises a spiral spring 40, disposed between the head part 18 of the arm portion 14 and the slider part 20, as will be explained in more detail with reference to Figure 3.

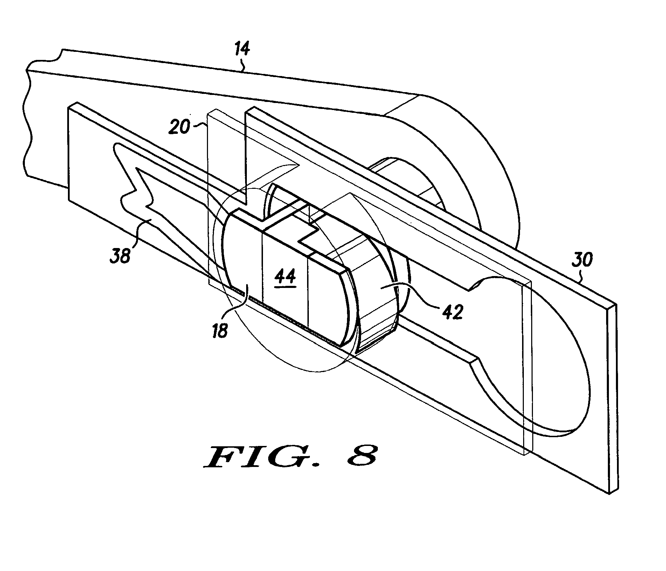

A flex connector 42 and corresponding flex shaft 44 are also provided for electrical connection between the first housing portion 10 and the second housing portion 12. The electrical connections will be described in more detail with reference to Figure 8.

In the illustrated arrangement, one arm portion 14 of the second housing portion 12 is provided with the spring 40 for opening the housing. The other arm portion 14 of the second housing portion 12 is fitted with the flex connector 42 and corresponding flex shaft 44, for providing electrical connection between the first and second housing portion. Clearly, as will be apparent to a skilled person the invention is not restricted to such an arrangement and both of the arm portions may carry springs and/or flex connectors in exemplary embodiments of the invention.

Figure 3 shows the hinge mechanism of Figure 2 in an assembled state in the closed position of the housing. The head part 18 of the arm portion 14 is fitted through slot 34 of the guide part 30, with its larger magnitude dimension parallel to slot 34, and through the slider hole 26 of the slider part 20. The spiral spring 40 is disposed between the head part 18 of the arm portion 14 and the slider part 20. In the illustrated arrangement, the head part 18 is provided with a recess 46 to receive one end of the spiral spring 40. The spiral spring 40 is arranged so as to exert a rotational force on the head part 18, in a direction tending to move the second housing portion 12 to an open position. However, the width of the slot 34 is smaller than the magnitude of the larger dimension of head part 18, and therefore the head part 18 is unable to rotate within slot 34.

The slider arm 28 of the slider part 20 is fitted to the slider arm slot 38 of the slider part 3. In the closed position of the housing, as shown, the slider arm 20 is in a stable position within the slider arm slot 28, and therefore the hinge mechanism is latched shut. In this situation, the slider spring 22 is extended, and exerts a force on slider 20 in direction Y as shown in Figure 3.

Figure 4 illustrates detail of the slider part 20 and the slider spring 22. As described previously, the spiral spring 40 is disposed in the slider hole 26. One end of the spiral spring 40 is mounted to the slider part 20 and the other end of the spiral spring 40 is attached to the head part 18 when the head part 18 is inserted into slider hole 26, as shown in Figure 3. Slider arm 28 comprises a beam 48 having a pin 50 at one end facing outwardly from the slider part 20, the beam being attached at its other end to the slider part. This arrangement allows beam 48 to act as a beam spring, so that the beam 48 may be deflected from its rest position in a vertical direction ZZ as shown: however, the deflection of the beam 48 will generate a force tending to return the beam 48 to its rest position.

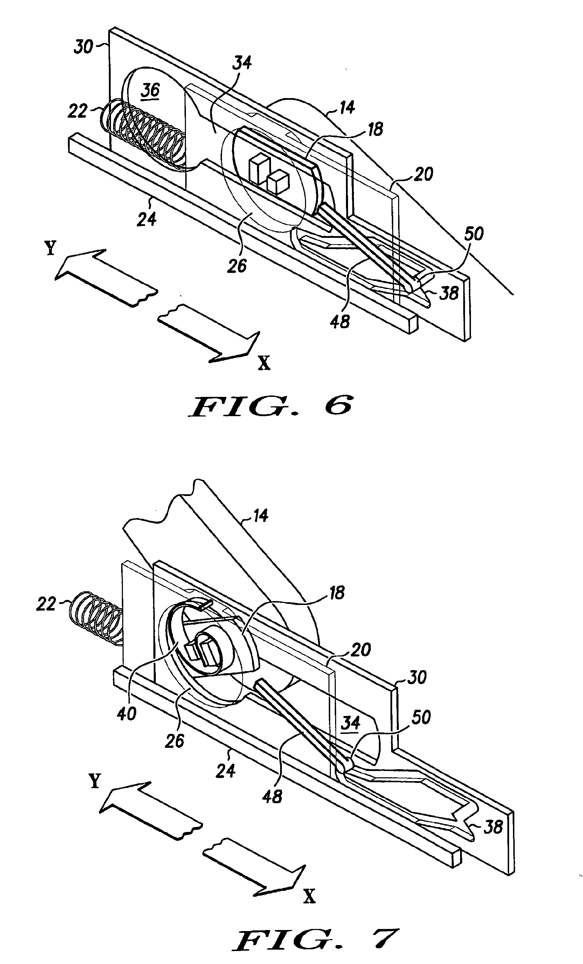

Figure 5 illustrates detail of the guide part. As described previously, the guide part 30 has formed therein a slot 34, forming a slide section, and a hole 36, forming a rotation section, for receiving the head part 18 of the arm portion 14, and a separate slider arm slot 38 for receiving the pin 50 of the slider arm 28. As will be explained in more detail with reference to Figures 6 and 7, during opening and closing of the first and second housing portions 10, 12, the slider part 20 moves relative to the guide part 30 along the guide rails 24. As the slider part 20 moves relative to the guide part 30 the pin 50 of the slider arm 28 moves in the slider arm slot 38.

In the closed position of the housing, the pin 50 is held in position A. Since a force in the direction Y is being exerted on the slider part 20 by the slider spring 22, as explained with reference to Figure 3, the pin 50 is stable in the concave portion 52 of the slider arm slot 38. It should be noted that the dotted line RR shown in Figure 5 denotes the level of pin 50 in the direction 77 when the beam 48 is in its rest position, as explained with reference to Figure 4. Since the beam 48 is deflected from its rest position, a downwards force, as shown, acts on the beam 48. Again, however, the pin 50 is stable in the concave portion 52 of the slider arm slot 38.

During opening of the housing, the pin 50 is guided by the slider arm slot 38 initially to position B in response to a force applied to the slider part 20 in a direction X (as will be explained later) and the downwards deflection force acting on the pin 50. Upon removal of the force in the direction X the slider part 20 moves in direction Y relative to the guide part in response to the force applied to the slider part 20 by the slider spring 22. The pin 50 therefore moves along the slider guide slot to position C, and then to position D under the influence of an upward deflection force, as shown, exerted by the beam 48. This position of pin 50 is a stable position, and corresponds to the open position of the housing, as will be explained later.

When the housing is closed, the shaping of the slider arm slot 38 at portion 54 encourages the pin 50 to move along the upper part of the slider arm slot 38, as shown, to position E. At position E the pin 50 is able to move back to position A, in response to the downward force exerted by the beam 48.

Figure 6 is a partial view of the assembled hinge mechanism in a closed position. The slider part 20, other than beam 48 and pin 50 of slider arm 28, is shown in outline only, for clarity.

As explained with reference to Figure 3, head part 18 of the arm portion 14 is fitted through slot 34 of the guide part 30, with its larger magnitude dimension parallel to slot 34, and through the slider hole 26 of the slider part 20. The slider spring 22 exerts a force on the slider part 20 in direction Y, as explained with reference to Figure 3. The pin 50 is in stable position A of the slider arm slot 38, as explained with reference to Figure 5.

In order to open the electronic device housing, the user pushes the second housing portion 12 in direction X, as explained with reference to Figure 1 a. As the head part 18 is free to move with respect to the slot 34 of guide portion 30, but not with respect to the slider hole 26 of the slider part 20, the head part 18 of the arm portion 14 of second housing portion 12, together with the slider part 20 move with respect to the guide part 30 in direction X. As a result, the pin 50 moves into position B as explained with reference to Figure 5.

Next the user releases the housing, as explained with reference to Figures 1 a and 1b. Since the force in the direction 1b is released, the slider part 20, together with the head part 18, moves in direction Y in response to the force exerted on slider part 20 by slider spring 22. The head part is thus moved along slot 34 of the guide part 30 until the head part 18 reaches the hole 36. As the slider part 20 moves in direction Y until the head part 18 reaches the hole 36, the pin 50 moves to position C, and then stable position D, as explained earlier with reference to Figure 5. This is the intermediate position shown with reference to Figure 1 b. The opening of the housing from the intermediate position shown in Figure 1b to the open position shown in Figure 1c will be explained with reference to Figure 7.

Figure 7 is a partial view of the hinge mechanism in the open position of the housing. The slider part 20 is now stationary, and the pin 50 is in stable position D. As explained above, the head part 18 of the arm portion 14 of the second housing 12 reaches the hole 36 of the guide part 30 at the intermediate position. Now free from the constraint of the slot 34, the head part 18 can rotate within the hole 36 of the guide part 30 and the slider hole 26 of the slider part 20 in response to the force acting on the head part 18 from the spiral spring 40. The second housing portion 12 thus rotates to the open position, as shown in Figure 1 c.

In order to close the housing again, the user rotates the second housing portion 12 from the open position shown in Figure 1c back to the intermediate position shown in Figure 1b. The head part 18 is therefore made to rotate within the hole 36 of the guide part 30 and the slider hole 26 of the slider part 20 against the force acting on the head part 18 from the spiral spring 40 until the head part is aligned with the slot 34. When the second housing portion 12 is then moved in direction X, the head part 18 moves along slot 34 of the guide part 30. Since the head part 18 is received in the slider hole 26 of the slider part 20, the slider part 20 also moves relative to the guide part against the force exerted by the slider spring 22. As explained previously with reference to Figure 5, the pin 50 moves along slider arm slot 38 to position E, and then back to position A. This is the closed position shown in Figure 1a.

As will be apparent to a skilled person, it is desirable to provide electrical connection between the first and second housing portions, for example for a display mounted on the second housing portion. An exemplary way of providing an electrical connection between the housing portions will now be described with reference to Figure 2 and Figure 8, which shows the flex connector forming an electrical connection between the slider part and the arm portion in an assembled state in a closed position.

As most clearly shown in Figure 2, the flex connector 42 is fitted to the flex shaft 44, the two arm-like portions of the flex connector 42 fitting around the beam portion of flex shaft 44. The flex shaft part 44 can then be fitted to head portion 18 and the arm-like portions of the flex connector 42 can be connected to circuitry n the second housing portion.

The remaining portion of the flex connector 42 is laid over the head part 18, as is more clearly shown in Figure 8, and is attached to the slider part 20. Sufficient slack in the flex connector 44 is provided to allow for the rotation of the head part relative to the slider part 20, as has been described previously. Finally, a flex connector is provided between the slider part 20 and the first housing portion and/or electrical/electronic circuitry thereon (not shown). This flex connector has sufficient slack to accommodate the travel in the slider part 20. In this way an advantageous arrangement for electrically connecting the housing portions has been disclosed.

Although the present invention has been described with reference to the illustrated embodiment, many variations are possible, as will be apparent to a skilled person, and all such modifications are intended to be included within the scope of the appended claims.

## Claims

1. A housing (100) having a first (10) and a second (12) housing portion, the housing having a hinge mechanism wherein one housing portion slides and rotates with respect to the other housing portion automatically in response to actuation by the user, wherein the first housing portion (10) is provided with at least one guide part (30), and the second housing portion (12) is provided with at least one arm part (14) fitted into the at least one guide part (30) such that the at least one arm part (14) is able to move relative to the at least one guide part (30), the housing being **characterized in that**:
the guide part (30) has a slide section (34), in which the arm part (14) is unable to rotate relative to the guide part (30) and a rotation section (36) in which the arm part (14) is able to rotate relative to the guide part (30).

2. The housing as claimed in claim 1 wherein the at least one guide part (30) and at least one arm part (14) are arranged such that the first housing portion (10) is able to rotate relative to the second housing portion (12) in a first arrangement and is not able to rotate relative to the second housing portion in a second arrangement.

3. The housing as claimed in any preceding claim wherein the first housing portion (10) is also provided with a sliding part (20) having an opening (26) into which the arm part (14) of the second housing portion (12) is fitted and relative to which the arm part of the second housing portion (12) can rotate.

4. The housing as claimed in claim 3 wherein a rotation spring (40) is disposed between the sliding part (20) of the first housing portion (10) and the arm part (14) of the second housing portion (12), the rotation spring (40) being biased to provide a force tending to rotate the arm part (14) of the second housing portion (12) to an open position.

5. The housing as claimed in claim 3 or 4 wherein a slider spring (22) is disposed between the sliding part (20) and the first housing portion (10), the slider spring (22) being biased to provide a force tending to push the sliding part (20) in the direction from the slide section (34) of the guide part (30) to the rotation section (36) of the guide part (30).

6. The housing as claimed in any preceding claim, further comprising a latch portion (28, 38) for holding the arm part (14) in the slide section (34) of the guide part (30) when the housing portions are in a closed position.

7. The housing as claimed in claim 6 wherein the latch portion (28, 38) comprises a slot (38) formed in the guide part (30) and a flexible bar (28) formed on the sliding part (20).

8. The housing as claimed in claim 7 wherein the slot (38) forces the flexible bar (28) to follow a non-return path during opening and shutting of the housing (100).

9. The housing as claimed in claim 3, 4 or 5 wherein the sliding part (20) and the arm part (14) are electrically connected.

10. The housing as claimed in claim 9 wherein the sliding part (20) is electrically connected to a printed circuit board on the second housing portion (12).

11. The housing as claimed in claim 9 or 10 wherein at least one flex connector (42) is used to provide the electrical connections.

12. A portable electronic device having a housing (100) as claimed in any preceding claim.

13. A communication device having a housing (100) as claimed in any preceding claim.

## Patentansprüche

1. Gehäuse (100), welches einen ersten (10) und einen zweiten (12) Gehäuseabschnitt aufweist, wobei das Gehäuse einen Gelenkmechanisums aufweist, wobei ein Gehäuseabschnitt gleitet und sich bezüglich des anderen Gehäuseabschnitts ansprechend auf eine Betätigung durch den Benutzer automatisch dreht, wobei der erste Gehäuseabschnitt (10) mindestens ein Führungsbauteil (30) aufweist, und der zweite Gehäuseabschnitt (12) mindestens ein Armbauteil (14) aufweist, welches in das mindestens eine Führungsbauteil (30) eingepasst oder eingefügt wird, so dass das mindestens eine Armbauteil (14) in der Lage ist, sich relativ zu dem mindestens einen Führungsbauteil (30) zu bewegen, wobei das Gehäuse **dadurch gekennzeichnet ist, dass**:
das Führungsbauteil (30) einen Gleitabschnitt (34) aufweist, in welchem das Armbauteil (14) nicht in der Lage ist, sich relativ zu dem Führungsbauteil (30) zu drehen, und einen Drehabschnitt (36), in welchem das Armbauteil (14) in der Lage ist, sich relativ zu dem Führungsbauteil (30) zu drehen.

2. Gehäuse nach Anspruch 1, **dadurch gekennzeichnet, dass** das mindestens eine Führungsbauteil (30) und das mindestens eine Armbauteil (14) derart angeordnet sind, dass der erste Gehäuseabschnitt (10) in einer ersten Anordnung in der Lage ist, sich relativ zu dem zweiten Gehäuseabschnitt (12) zu drehen, und in einer zweiten Anordnung nicht in der Lage ist, sich relativ zu dem zweiten Gehäuseabschnitt zu drehen.

3. Gehäuse nach einem der vorhergehenden Ansprüche, **dadurch gekennzeichnet, dass** der erste Gehäuseabschnitt (10) zudem ein Gleitbauteil (20) mit einer Öffnung (26) aufweist, in welche das Armbauteil (14) des zweiten Gehäuseabschnitts (12) eingepasst oder eingefügt wird, und zu welchem sich das Armbauteil des zweiten Gehäuseabschnitts (12) relativ drehen kann.

4. Gehäuse nach Anspruch 3, **dadurch gekennzeichnet, dass** eine Drehfeder (40) zwischen dem Gleitbauteil (20) des ersten Gehäuseabschnitts (10) und dem Armbauteil (14) des zweiten Gehäuseabschnitts (12) angeordnet ist, wobei die Drehfeder (40) zur Bereitstellung einer Kraft vorgespannt ist, welche dazu neigt, das Armbauteil (14) des zweiten Gehäuseabschnitts (12) in eine geöffnete Position zu drehen.

5. Gehäuse nach Anspruch 3 oder 4, **dadurch gekennzeichnet, dass** eine Gleitfeder (22) zwischen dem Gleitbauteil (20) und dem ersten Gehäuseabschnitt (10) angeordnet ist, wobei die Gleitfeder (22) zur Bereitstellung einer Kraft vorgespannt ist, welche dazu neigt, das Gleitbauteil (20) in die Richtung von dem Gleitabschnitt (34) des Führungsbauteils (30) zu dem Drehabschnitt (36) des Führungsbauteils (30) zu drücken.

6. Gehäuse nach einem der vorhergehenden Ansprüche, welches weiter einen Verriegelungsabschnitt (28, 38) zum Halten des Armbauteils (14) in dem Gleitabschnitt (34) des Führungsbauteils (30) aufweist, sobald sich die Gehäuseabschnitte in einer geschlossenen Position befinden.

7. Gehäuse nach Anspruch 6, **dadurch gekennzeichnet, dass** der Verriegelungsabschnitt (28, 38) einen in dem Führungsbauteil (30) gebildeten Schlitz (38) sowie einen auf dem Gleitbauteil (20) gebildeten freibeweglichen Schieber oder Riegel (28) aufweist.

8. Gehäuse nach Anspruch 7, **dadurch gekennzeichnet, dass** der Schlitz (38) den freibeweglichen Schieber oder Riegel (28) veranlasst, während des Öffnens und Schließens des Gehäuses (100) einem Einweg zu folgen.

9. Gehäuse nach Anspruch 3, 4 oder 5, **dadurch gekennzeichnet, dass** das Gleitbauteil (20) und das Armbauteil (14) elektrisch miteinander verbunden sind.

10. Gehäuse nach Anspruch 9, **dadurch gekennzeichnet, dass** das Gleitbauteil (20) mit einer Leiterplatte oder gedruckten Schaltung auf dem zweiten Gehäuseabschnitt (12) elektrisch verbunden ist.

11. Gehäuse nach Anspruch 9 oder 10, **dadurch gekennzeichnet, dass** mindestens ein Flex Connector oder flexibler Anschluss (42) zur Bereitstellung der elektrischen Verbindungen verwendet wird.

12. Tragbare elektronische Vorrichtung, welche ein Gehäuse (100) gemäß einem der vorhergehenden Ansprüche aufweist.

13. Kommunikationsvorrichtung, welche ein Gehäuse (100) gemäß einem der vorhergehenden Ansprüche aufweist.

## Revendications

1. Logement (100) présentant une première (10) et une seconde (12) partie de logement, le logement présentant un mécanisme à charnière dans lequel une partie de logement coulisse et pivote par rapport à l'autre partie de logement automatiquement en réponse au déclenchement de l'utilisateur, dans lequel la première partie de logement (10) est délivrée avec au moins une partie de guidage (30), et la seconde partie de logement(12) est délivrée avec au moins une partie de bras (14) fixée dans au moins une partie de guidage (30) de sorte que la partie parmi au moins une partie de bras (14) est capable de se déplacer par rapport à la partie parmi au moins une partie de guidage (30), le logement étant **caractérisé en ce que**:
la partie de guidage (30) présente une section de glissière (34), dans laquelle la partie de bras (14) est incapable de pivoter par rapport à la partie de guidage (30) et une section de rotation (36) dans laquelle la partie de bras (14) est capable de pivoter par rapport à la partie de guidage (30).

2. Logement selon la revendication 1 dans lequel la partie parmi au moins une partie de guidage (30) et la partie parmi au moins au partie de bras (14) sont disposées de sorte que la première partie de logement (10) est capable de pivoter par rapport à la seconde partie de logement (12) dans une première disposition et n'est pas capable de pivoter par rapport à la seconde partie de logement dans une seconde disposition.

3. Logement selon l'une quelconque des revendications précédentes dans lequel la première partie de logement (10) est aussi délivrée avec une partie de glissière (20) présentant une ouverture (26) dans laquelle la partie de bras (20) de la seconde partie de logement (12) est fixée et par rapport à laquelle la partie de bras dans la seconde partie de logement (12) peut pivoter.

4. Logement selon la revendication 3 dans lequel un ressort spiral (40) est disposé entre la partie de glissière (20) de la première partie de logement (10) et la partie de bras (14) de la seconde partie de logement (12), le ressort spiral (40) étant biaisé pour délivrer une force tendant à faire pivoter la partie de bras (14) de la seconde partie de logement (12) dans la position ouverte.

5. Logement selon la revendication 3 ou 4 dans lequel un ressort de glissière (22) est disposé entre la partie de glissière (20) et la première partie de logement (10), le ressort de glissière (22) étant biaisé afin de délivrer une force tendant à pousser la partie de glissière (20) dans la direction de la section de glissière (34) de la partie de guidage (30) à la section de rotation (36) de la partie de guidage (30) .

6. Logement selon l'une quelconque des revendications précédentes comportant en outre une partie de verrouillage (28, 38) pour maintenir la partie de bras (14) dans la section de glissière (34) de la partie de guidage (30) lorsque les parties de logement sont dans une position fermée.

7. Logement selon la revendication 6 dans lequel la portion de verrouillage (28, 38) comporte une fente (38) formée dans la partie de guidage (30) et une barre flexible (28) formée sur la partie de glissière (20).

8. Logement selon la revendication 7 dans lequel la fente (38) force la barre flexible (28) à suivre un trajet de non retour pendant l'ouverture et la fermeture du logement (100).

9. Logement selon la revendication 3,4 ou 5 dans lequel la partie de glissière (20) et la partie de bras (14) sont connectées électriquement.

10. Logement selon la revendication 9 dans lequel la partie de glissière (20) est connectée électriquement à un circuit imprimé présent sur la deuxième partie de logement (12).

11. Logement selon la revendication 9 ou 10 dans lequel au moins un raccord souple (42) est utilisé pour délivrer les connexions électriques.

12. Dispositif électronique portatif présentant un logement (100) selon l'une quelconque des revendications précédentes.

13. Dispositif de communication comportant un logement (100) selon l'une quelconque des revendications précédentes.
